# EUROPEAN PATENT APPLICATION

(11) **EP 4 589 278 A1**
(43) Date of publication of application: **23.07.2025**
(21) Application number: 25152920.2
(22) Date of filing: 20.01.2025
(51) Int. Cl.: G01M 11/00, H04B 10/071

(54) **CLASSIFICATION OF AN OPTICAL EVENT IN AN OTDR MEASUREMENT BASED ON HISTORICAL DATA**

(30) Priority: 22.01.2024 US 202463623474 P
(71) Applicant: EXFO Inc., Québec, QC G1M 2K2 (CA)
(72) Inventor: PERRON, Stephane, Québec, G1M 2K2 (CA)
(74) Representative: Gregory, Alexandra Louise

(57) **Abstract**

In order to assist in determining the physical nature of an optical event as monitored by an OTDR in an optical fiber network, there are herein provided OTDR methods and system which leverage historical values measured on reflective events for characterizing events along an optical fiber link. A plurality of OTDR acquisitions is performed toward the optical fiber link over a period of time. Parameters characterizing a target event are derived using the recorded OTDR acquisitions. One of said parameters represents a stability, over the period of time, of a reflectance peak level associated with the event. The event is classified at least based on said stability.

## Description

### TECHNICAL FIELD

The present description generally relates to Optical Time Domain Reflectometry (OTDR), and more particularly to monitoring an optical fiber network using OTDR measurements.

### BACKGROUND

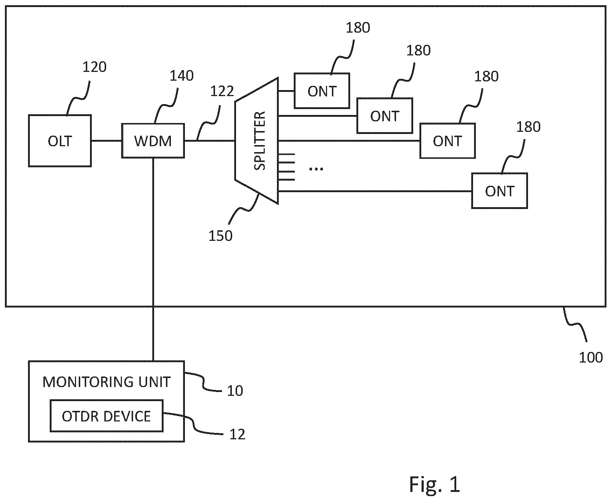

In a point-to-multipoint Passive Optical Network (PON) system (see Fig. 1), an Optical Line Terminal (OLT) transmit the optical signals to the PON network and coordinate the optical network terminals multiplexing for the shared upstream transmission. It is located at the service provider's central office. The signals travels through the PON via an Optical Distribution Network (ODN) to a plurality of Optical Network Terminals (ONTs) (also referred to sometimes as the Optical Network Units (ONUs)) which are disposed near to the end users. The ODN comprises optical splitters to distribute the optical signals from the OLT to the ONTs.

Optical Time Domain Reflectometry (OTDR) monitoring tools are widely used at present to monitor and diagnose optical fiber faults in optical fiber networks. There are particular and numerous challenges when monitoring Passive Optical Networks (PONs), and especially in point-to-multipoint PONs. For example, OTDR detection is sometimes not particularly sensitive to the attenuation of optical signals at the end of some Optical Distribution Network (ODN) branch fibers.

The present solution is to install a wavelength-selective High Reflection Demarcation (HRD) reflector on the Optical Network Terminal (ONT) side. This reflector helps accurately detecting the end-to-end attenuation of the optical link from the Optical Line Terminal (OLT) to the Optical Network Terminal (ONT). The reflectors ensure that a signal can be detected by the OTDR at every location where an end-to-end loss assessment must be performed. By monitoring the reflection peaks, network operators can monitor the health of all fiber paths.

However, HRDs adds an extra cost to the PON system, especially when scaled to millions of units, increases the inventory complexity, reduces the optical power budget and can sometimes be inadvertently removed or damaged. Moreover, an HRD generates a very high reflectance level that creates detection dead zones on OTDR traces that could prevent localization of a fault. It would therefore be beneficial to eliminate the need for the discrete HRD reflectors, especially in the case of PONs that were installed without such HRD reflectors, because it would be very cumbersome to go back to install them on live networks. There is therefore a need for monitoring PONs that are not equipped with High Reflection Demarcation (HRD) reflectors using Optical Time Domain Reflectometry (OTDR) monitoring technology.

ONTs may also generate reflectance peaks without the use of HRD reflectors, due to the inherent reflectance at the optical interfaces within the ONT. However, in OTDR monitoring, the ONT reflectance peaks can be confused with other reflective events that may generate similar reflectance levels. For instance, a fiber break or an open connector that arises close to an ONT could be easily confused with a missing ONT reflectance peak.

The capability to detect and distinguish optical events generated by optical network components such as Optical Network Terminals (ONT) from other possible sources of optical events such as faults in the optical network would allow to enrich fault context, for example when a PON subscriber loses services. A proper classification of reflective optical events would allow to better discriminate between fiber issues or other possible issues (optical power, transport layer, IP layer...) from expected optical network components, such as ONT reflectance peaks.

In monitoring an optical fiber network using OTDR measurements, there is therefore a need to detect and distinguish fiber faults from optical events inherently generated by optical network components, such as but not limited to ONT reflectance peaks.

### SUMMARY

In order to assist in determining the physical nature of an optical event (e.g. post-splitter reflectance peaks, ONT reflectance peaks, reflective optical events caused by physical layer fault such as fiber breaks, optical connectors, etc.) as monitored by an OTDR in an optical fiber network, there are herein provided OTDR methods and apparatuses which leverage historical values measured on reflective events for characterizing events along an optical fiber link. A plurality of OTDR acquisitions is performed toward the optical fiber link over a period of time. Parameters characterizing a target event are derived using the recorded OTDR acquisitions. One of said parameters represents a stability, over the period of time, of a reflectance peak level associated with the event. The event is classified at least based on said stability.

Up to now, OTDRs used only punctual values of an optical event (insertion loss and reflectance values) for classification. It was now found that looking at the stability over time of the reflectance value may be indicative of the physical nature of the event.

For example, ONT reflectance peaks have relatively stable and slow variation patterns, such as variations below 2 dB of the peak reflectance level over few hours or days. On the contrary, fiber breaks are very sensitive to wavelength, polarization, temperature and humidity and may vary by several dBs (e.g., 4 to 8 dB) over a short period of time (i.e., minutes). As to open drop port connectors (typically APC connectors), reflectance values also vary more than that of ONTs.

There is therefore proposed to monitor the variations of reflectance peaks over time and use that information to help determine the physical nature of the reflectance. For example, a very stable reflectance peak (variations below 2 dB over a few hours or days) that is within an expected range of peak levels may be identified as reflectance peak generated by an ONT.

In some implementations, there is further proposed to use a monitoring strategy where a repetition rate of the OTDR acquisitions is increased, if necessary, when an anomaly is detected on the link. This monitoring is used to feed the short-term history of reflectance levels with more data points in order to observe its stability and optimize the response time of this advanced analysis.

In some other implementations, an OTDR apparatus equipped with a laser that allows small tuning of the wavelength may be leveraged. In a diagnosis mode, the measurement algorithm may slightly shift the wavelength to stimulate reflectance variations. Fiber breaks and open APC connectors are typically sensitive to small changes of wavelength (about 1 nm), whereas ONT reflectance peaks are not.

In accordance with one aspect, there is provided an OTDR method for characterizing an event along an optical fiber link, the method comprising:
recording a plurality of OTDR acquisitions performed toward the optical fiber link over a period of time, wherein each OTDR acquisition is performed by propagating in the optical fiber link, a pulsed test signal and detecting corresponding return light from the optical fiber link representing backscattered and reflected light as a function of distance in the optical fiber link;
deriving parameters characterizing the event using the recorded OTDR acquisitions, wherein one of said parameters represents a stability, over the period of time, of a reflectance peak level associated with the event; and
classifying the event at least based on said stability.

In accordance with another aspect, there is provided an OTDR method for identifying a physical layer fault along an optical fiber link, the method comprising:
recording a plurality of OTDR acquisitions performed toward the optical fiber link over a first period of time, wherein each OTDR acquisition is performed by propagating in the optical fiber link, a pulsed test signal and detecting corresponding return light from the optical fiber link representing backscattered and reflected light as a function of distance in the optical fiber link;
deriving parameters characterizing one or more reflective events along the link using the recorded OTDR acquisitions, in order to establish a baseline characterizing the optical fiber link, the baseline comprising a position and a reflectance peak level stability of each said reflective events along the optical fiber link;
receiving a failure notification indicating a communication failure along the optical fiber link,
upon receiving the failure notification, recording a second plurality of OTDR acquisitions over a second period of time;
deriving parameters characterizing one or more reflective events along the link using the second plurality of OTDR acquisitions, wherein said parameters comprise a position and a reflectance peak level stability, over the second period of time, of each said reflective events along the link; and
compare the parameters derived from the second plurality of OTDR acquisitions to the baseline to detect any new unstable reflective event, wherein a new unstable reflective event is identified as a physical layer fault.

In some implementations, a repetition rate of the OTDR acquisitions is increased upon receiving said failure notification to record said second plurality of OTDR acquisitions.

In accordance with another aspect, there is provided an OTDR system for characterizing an optical fiber link, the OTDR system comprising:
an OTDR acquisition device connectable toward an end of the optical fiber link for performing a plurality of OTDR acquisitions toward the optical fiber link, wherein each OTDR acquisition is performed by propagating in the optical fiber link, a pulsed test signal and detecting corresponding return light from the optical fiber link representing backscattered and reflected light as a function of distance in the optical fiber link; and
a processing unit receiving the OTDR trace and configured to:
   record a plurality of OTDR acquisitions over a period of time;
   derive parameters characterizing the event using the recorded OTDR acquisitions, wherein one of said parameters represents a stability, over the period of time, of a reflectance peak level associated with the event; and
   classify the event at least based on said stability.

In some implementations, once the event is classified as an ONT, its reflectance peak level may be monitored over time as a health indicator to detect any eventual anomaly in the optical fiber link reaching the corresponding Optical Network Terminal.

In some implementations, the event is classified as a candidate for an Optical Network Terminal if its reflectance peak level is stable.

In some implementations, the event is classified as an Optical Network Terminal if its reflectance peak level is stable and within an expected range of reflectance peak levels.

In some implementations, the event is classified as a potential physical layer fault if its reflectance peak level is unstable.

In some implementations, a reflectance peak level is defined as stable if fluctuations of the reflectance peak level are below a reflectance stability threshold.

In some implementations, a reflectance peak level is defined as unstable if fluctuations of the reflectance peak level, over the period of time, are above a reflectance stability threshold.

In some implementations, a wavelength of an OTDR light source used for said OTDR acquisitions may be slightly tuned while recording said plurality of OTDR acquisitions and wherein said stability represents a stability over wavelength of the reflectance peak level associated with the event.

In this specification, unless otherwise mentioned, word modifiers such as "substantially" and "about" which modify a value, condition, relationship or characteristic of a feature or features of an embodiment, should be understood to mean that the value, condition, relationship or characteristic is defined to within tolerances that are acceptable for proper operation of this embodiment in the context its intended application. In particular, the term "about" generally refers to a range of numbers that one skilled in the art would consider equivalent to the stated value (e.g., having the same or an equivalent function or result). In some instances, the term "about" may mean a variation of ±10% of the stated value. It is noted that all numeric values used herein are assumed to be modified by the term "about", and that all conditions, relationships or characteristics used herein are assumed to be modified by the term "substantially", unless stated otherwise. The term "between" is used herein to refer to a range of numbers or values defined by endpoints is intended to include both endpoints, unless stated otherwise.

Further features and advantages of the present invention will become apparent to those of ordinary skill in the art upon reading of the following description, taken in conjunction with the appended drawings.

The following description is provided to gain a comprehensive understanding of the methods, apparatus and/or systems described herein. Various changes, modifications, and equivalents of the methods, apparatuses and/or systems described herein will suggest themselves to those of ordinary skill in the art. Description of well-known functions and structures may be omitted to enhance clarity and conciseness.

Although some features may be described with respect to individual exemplary embodiments, aspects need not be limited thereto such that features from one or more exemplary embodiments may be combined with other features from one or more other exemplary embodiments.

### BRIEF DESCRIPTION OF THE DRAWINGS

Fig. 1 is a block diagram illustrating a Passive Optical Network (PON) system in accordance with an embodiment.
Fig. 2 is a graph showing a portion of an example of an OTDR trace as obtained by monitoring a PON such as the PON of Fig. 1.
Fig. 3 is a graph showing historical data recorded by OTDR monitoring over a PON over 8 days.
Fig. 4 is a flowchart illustrating a method for characterizing an event along an optical fiber link, in accordance with one embodiment.
Fig. 5 is a flowchart illustrating an exemplary classification method in more detail, in accordance with one embodiment which is used to discriminate physical layer faults from expected optical network components, such as ONT reflectance peaks.
Fig. 6 is a flowchart illustrating an exemplary OTDR monitoring method for identifying a physical layer fault along an optical fiber link, in accordance with one embodiment.
Fig. 7 is a block diagram illustrating an example architecture of an OTDR device of the system of Fig. 1.
Fig. 8 is a block diagram illustrating an example architecture of an OTDR acquisition device of the OTDR device of Fig. 7.

It will be noted that throughout the drawings, like features are identified by like reference numerals. In the following description, similar features in the drawings have been given similar reference numerals and, to not unduly encumber the figures, some elements may not be indicated on some figures if they were already identified in a preceding figure. It should be understood herein that elements of the drawings are not necessarily depicted to scale, since emphasis is placed upon clearly illustrating the elements and structures of the present embodiments. Some mechanical or other physical components may also be omitted in order to not encumber the figures.

Furthermore, throughout the drawings, and especially in block diagrams and flowcharts, dash lines are generally used to indicate that a component is intended to be optional.

### DETAILED DESCRIPTION

Optical Time-Domain Reflectometry (OTDR - also used to refer to the corresponding device) is widely employed for characterization of optical fiber links. OTDR is a diagnostic technique where a test signal in the form of light pulses is launched in the optical fiber link under test and the return light signal, arising from backscattering and reflections along the link, is detected and analyzed. The acquired power level of the return light signal as a function of time is referred to as an "OTDR trace" or a "reflectometric trace", where the time scale is representative of distance between the OTDR acquisition device and a point along the fiber link. Herein, the process of launching a test signal and acquiring the return light signal to obtain therefrom an OTDR trace is referred to as an "OTDR acquisition".

In the following description, techniques that are generally known to the ones skilled in the art of OTDR measurement and OTDR trace processing and analysis will not be explained or detailed and in this respect, the reader is referred to available literature in the art. Such techniques that are considered to be known may include, e.g., signal processing methods for identifying and characterizing events from an OTDR trace. Similarly, an OTDR acquisition device is understood to comprise conventional optical hardware and electronics as known in the art for performing OTDR acquisitions on an optical fiber link.

Each OTDR acquisition is understood to refer to the actions of propagating a test signal comprising one or more test light pulses having the same pulse width in the optical fiber link, and detecting corresponding return light signal from the optical fiber link as a function of time. A test light-pulse signal travelling along the optical fiber link will return towards its point of origin either through (distributed) backscattering or (localized) reflections. The acquired power level of the return light signal as a function of time is referred to as the OTDR trace, where the time scale is representative of distance between the OTDR acquisition device and a point along the optical fiber link. Light acquisitions may be repeated with varied pulse width values to produce a separate OTDR trace for each test pulse width.

One skilled in the art will readily understand that in the context of OTDR methods and systems, each light acquisition generally involves propagating a large number of substantially identical light pulses in the optical fiber link and averaging the results. In this case, the result obtained from averaging will herein be referred to as an OTDR trace. It will also be understood that other factors may need to be controlled during the light acquisitions or from one light acquisition to the next, such as gain settings, pulse power, etc. as is well known to those skilled in the art.

"Backscattering" refers to Rayleigh scattering occurring from the interaction of the travelling light with the optical fiber media all along the fiber link, resulting in a generally sloped background light (in logarithmic units, i.e. dB, on the ordinate) on the OTDR trace, whose intensity disappears at the end of the range of the travelling pulse. "Events" along the fiber will generally result in a more localized drop of the backscattered light on the OTDR trace, which is attributable to a localized loss, and/or in a localized reflection peak. It will be understood that an "event" characterized by the OTDR method described herein may be generated by any perturbation along the fiber link which affects the returning light. Typically, an event may be generated by an optical fiber splice along the fiber link, which is characterized by a localized loss with little or no reflection. Mating connectors can also generate events that typically present reflectance, although these may be impossible to detect in some instances. OTDR methods and systems may also provide for the identification of events such as a fiber breakage, characterized by substantial localized loss and, frequently, a concomitant reflection peak, as well as loss resulting from a bend in the fiber. Finally, any other component along the fiber link may also be manifest as an "event" generating localized loss.

OTDR technology can be implemented in different manners and advanced OTDR technology typically involves multi-pulse acquisitions and analysis whereby the OTDR acquisition device makes use of multiple acquisitions performed with different pulse widths in order to provide different spatial resolutions and noise level conditions for event detection and measurement along the optical fiber link under test and provide a complete mapping of the optical fiber link. As such, an OTDR measurement may comprise multiple OTDR acquisitions performed with different pulse widths or other varying conditions. One or more OTDR traces acquired for a given OTDR measurement may be saved as part of an OTDR measurement data file or files.

Now referring to the drawings, Fig. 1 illustrates a Passive Optical Network (PON) system in accordance with an embodiment.

Passive Optical Networks are used to provide networking access to subscribers and may be used in many applications including Fiber To The Home (FTTH), Fiber To The Office (FTTO) and Fiber To The Neighborhood (FTTN). A PON generally comprises a supplier-side Optical Line Terminal (OLT) 120 located at the service provider's central office, and Optical Network Terminals (ONTs) 180 which are disposed close to the end subscribers. The optical signals travel through the PON via an Optical Distribution Network (ODN) which comprises optical fiber links 122 extending from the OLT 120 to the each ONTs 180.

PONs can be divided into two main families, i.e., point-to-point and point-to-multipoint PONs. In point-to-point, each a single ONT is connected to a single optical line extending from the OLT 120, whereas in point-to-multipoint PONs (see Fig. 1), multiple ONTs are connected to a single optical line 122 extending from the OLT 120 via an ODN. The ODN comprises one or more optical splitters 150 from which the single optical line 122 is branched to each ONT 180. In other embodiments, there may be two or more stages of splitters (not shown), depending on the configuration.

The OLT 120 generates a single signal and transmit this signal to the optical line 122, through an optical power splitter arrangement to reach the ONTs 180, using time division multiplexing. The OLT 120 also receives PON signals from one or more ONTs via the optical splitter(s) 150. The OLT 120 then also demultiplexes the received ONT signals for detection.

The PON 100 may be equipped with a monitoring unit 10 to monitor and diagnose optical fiber faults in the optical fiber network.

The monitoring system comprises an OTDR device 12 and a Wavelength Division Multiplexer (WDM) 140. To monitor the ODN, the OTDR device 12 generates a test signal having a wavelength different from the PON signals (OLT and ONT signals) so it does not affect PON data transmission.

For example, the wavelength of the signal light may be approximately 1600 nm or less. More particularly, the PON optical signals may have a wavelength between about 1270 nm or 1603 nm, whereas the wavelength of the test signal may be between about 1625 nm to 1650 nm. The OTDR 12 transmits the test signal toward the ODN via the optical line 122 and receives return light from the combination of all PON branches, which represents backscattered and reflected light as a function of a distance within the ODN.

The WDM 140 is configured to combine PON signals and the OTDR test signal toward the ODN via the optical line 122 and to extract OTDR return light returning from the ODN toward the monitoring unit 10.

Accordingly, the OTDR device may characterize events along the ODN, including events generated by splitters, ONTs, connections, open connectors, etc. It may be used to detect and diagnose unexpected optical faults in the ODN.

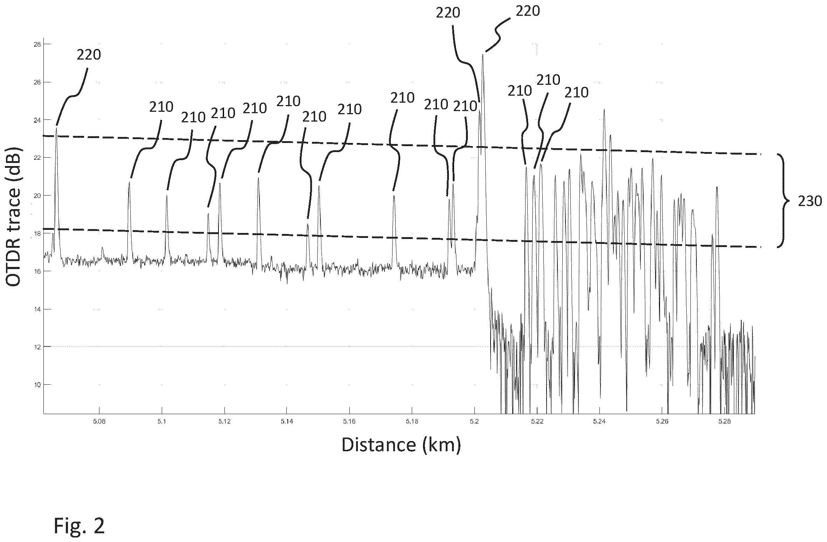

Fig. 2 is a graph showing a portion of an example of an OTDR trace as obtained by monitoring a PON such as the PON of Fig. 1. In this graph, a horizontal axis denotes the distance km, and a vertical axis denotes the OTDR return light level in dB. Here, the graph is zoomed on a distance of about 5 km within the ODN, that is where most ONT reflectance peaks 210 are located for this specific case. It is noted that this OTDR trace is obtained on a PON which does not use wavelength-selective HRDs. The ONT reflectance peaks 210 are therefore generated by the inherent reflectance at the optical interfaces within each ONT.

The OTDR test signal therefore also splits to propagate toward each of the PON branches and therefore each ONTs and OTDR return light is made of backscattered and reflected light coming from each PON branches as combined on a single OTDR trace. As shown in Fig. 2, the OTDR traces therefore shows multiple reflective events corresponding to the presence of respective multiple ONTs (appearing as peaks in the OTDR traces). Because the distance between the OLT and the various ONTs may vary depending on the actual locations of the subscribers and therefore the length of the optical fiber branch required to reach the subscribers, the ONT reflectance peaks 210 are spread along the OTDR trace and multiple peaks may also sometimes merge at a same or a similar distance from the OTDR. In the example illustrated in Fig. 2, the ODN comprises two stages of splitters. Here, the ONTs are spread from a distance of 5.06 to 5.28 km. The sharper drop in the Rayleigh Backscattering at distance 5.2 km corresponds to the end of the longest fiber(s) feeding the second stage of splitters. An OTDR trace configured for ONT monitoring might not provide visibility on the Rayleigh Backscattering of the fibers connecting the last stage splitters to the ONTs due to the small pulse width used for peaks detection and the consequent lack of dynamic range.

It is noted that test signal light backscattered by all the branches is merged together on the OTDR trace. Even if the compound backscattering level corresponding to the sum of each individual optical fiber branch going to ONT reflectance peak 210 would be visible on the OTDR trace, a direct measurement of the actual reflectance value of any ONT reflectance peaks 210 from the OTDR trace is not possible. However, the ONT reflectance peak level on the OTDR remains informative. As shown, unless the position of the ONTs on the distance scale is known a priori, it is very difficult to determine if a given reflective event is generated by an ONT. The ONT reflectance peaks 210 can be confused with other reflective events 220 that may generate similar reflectance levels. For instance, a fiber break, a poor connector or an open connector that arises close to an ONT could be easily confused with a missing ONT reflectance peak.

It is also noted that, although not known in absolute, ONT reflectance peak levels can be expected to lie within an expected range 230 of values determined by its optical arrangement. The ONT manufacturer's specification or prior characterizations of a sample of ONTs can be informative of the expected range of reflectance peak levels. The expected range 230 of reflectance peak levels may also be discovered from OTDR monitoring data, e.g., from a distribution of level of the reflectance peaks found on a given OTDR monitoring trace. It should be noted that the reflectance peak level herein refers to the "absolute" level of the peak on the OTDR trace, as opposed to this reflectance value, which refers to the amplitude of the peak with respect to the ground backscattering level (which is herein not visible on the OTDR trace). It is further noted that the expected range 230 of reflectance peak level varies as a function of the distance between the OLT and the ONT due to optical fiber loss. The farther the ONT is from the OLT, the greater is the optical fiber loss. That being said, in typical PON configurations, all ONTs undergo a similar splitter loss, i.e., if there are multiple levels of splitters, it will be the same number of levels for all ONTs. The total loss to each ONT can be estimated using different known strategies and data sources. So, as shown in Fig. 2, the expected range of reflectance peak level is mainly function of the distance between the OLT and the given ONT reflectance peak.

However, relying only on the reflectance level of a peak to classify a reflective event as an ONT or a physical layer fault (such as a fiber break) or an open connector would not be reliable. This is where the historical data plays its role.

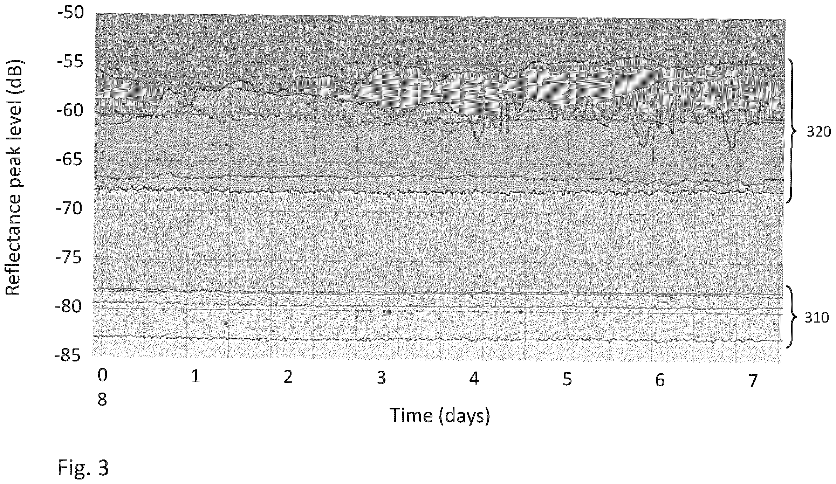

Fig. 3 is a graph showing historical data recorded by OTDR monitoring over a PON over 8 days. The graph shows fluctuations of the reflectance peak levels corresponding to a plurality of reflective events identified along the ODN. Four events 310 correspond to ONT reflectance peaks 310 whereas the other correspond to other reflective events 320 which may be produced by any other optical component on the ODN, including a good connector, a poor connector, an open connector or a physical layer fault such as a fiber break, etc. As shown, the reflectance peak levels of the ONT reflectance peaks 310 are between -83 and -77 dB, which, herein, are within the expected range of reflectance peak levels (i.e., about -35 dB of reflectance on a 22 dB link loss). As shown, the reflectance peak levels are also very stable in time (fluctuations are way below a stability threshold, e.g., 2 dB, over the given time period). However, when looking at the other reflective events, some are stable, whereas others are unstable (peak-to-peak fluctuations are above a stability threshold, e.g., 2 dB, over the given time period). The stable events are likely to correspond to expected optical components, whereas the unstable ones, are likely to correspond to physical layer faults or open connectors.

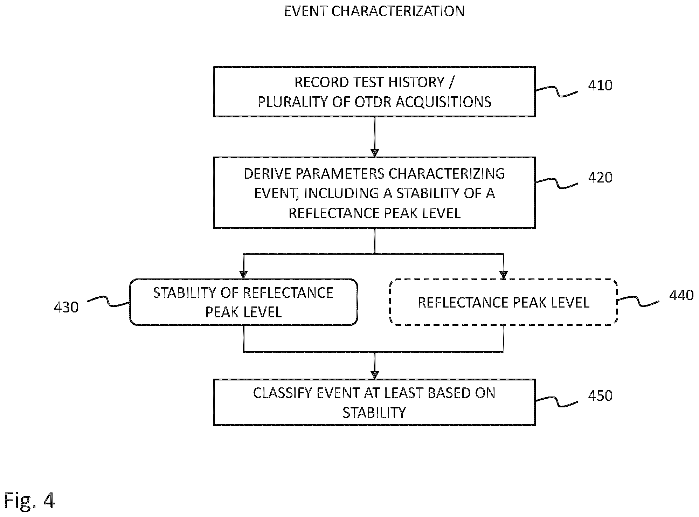

Fig. 4 illustrates a method for characterizing an event along an optical fiber link, in accordance with one embodiment. In some implementations, the method of Fig. 4 may be used to discover an ONT within an PON. The method may also be used more generally to classify one or more reflective events identified in OTDR monitoring of an optical fiber link. The method may be used to assist in determining the physical nature of an optical event (e.g. post-splitter reflectance peaks, ONT reflectance peaks, reflective optical events caused by physical layer fault such as fiber breaks, optical connectors, etc.) as monitored by an OTDR in an optical fiber network, by leveraging historical values measured on reflective events. Of course, the method may be used to characterize one or more events along the optical fiber link.

In step 410, the OTDR monitoring unit 10 records a plurality of OTDR acquisitions performed toward the optical fiber link over a period of time. As explained hereinabove, each OTDR acquisition is performed by propagating in the optical fiber link, a pulsed test signal and detecting corresponding return light from the optical fiber link representing backscattered and reflected light as a function of distance in the optical fiber link, to thereby obtain an OTDR trace.

For example, the period of time over which historical data is recorded and considered for event classification may vary between a few hours to a few days and ideally between about 4 and 48 hours, providing at least a few samples and ideally more than at least 10 samples within the time period.

In step 420, for a specific event among the events to be characterized, parameters characterizing the event are derived using the recorded OTDR acquisitions, wherein one of the derived parameters represents a stability 430, over the period of time, of a reflectance peak level associated with the event. The stability parameter looks at fluctuations of the reflectance peak level, over the period of time. Optionally, another one of the derived parameters may represent a reflectance peak level 440 associated with the event.

It is noted that the stability parameter looks at fluctuations of the reflectance peak level, as opposed to a slow drift. It may be defined as the peak-to-peak variation of the reflectance peak level, a standard deviation of the reflectance peak level values or any other suitable parameters. In some embodiment, any slow drift may be removed from the reflectance peak level values before calculating the fluctuations, using, e.g. a linear or a polynomial regression, for example. Moreover, a fluctuation pattern that is common to a group of reflective events may also be removed.

Of course, as known in the art, parameters characterizing the event may further comprise a position and a reflectance peak level characterizing the event. For example, the reflectance peak level parameter may be obtained from an average (mean, median, etc.) over the time period.

The stability parameter may further define if a reflectance peak level is stable or unstable. In some embodiments, a threshold is used such that the reflectance peak level is considered stable if fluctuations of the reflectance peak level (e.g., peak-to-peak or standard deviation), over the period of time, are below a reflectance stability threshold (such as 1 dB, 2 dB or the like) and the reflectance peak level is considered unstable if fluctuations are above the reflectance stability threshold.

In some embodiments, the threshold may be a fixed parameter, whereas in other embodiments, it may be made dynamic, e.g., by observing natural fluctuations of a plurality of reflectance peaks within the optical fiber link over, e.g., a few days, to define a stability threshold such that fluctuations that are above the natural fluctuations are considered unstable.

In step 450, the event is classified at least based on the stability. Stable events are likely to correspond to expected optical components (such as a splitter, an ONT, a reflective demarcation device, etc.), whereas unstable ones, are likely to correspond to physical layer faults or open connectors. OTDR monitoring may be used to discover ONTs along the optical fiber link. Therefore, in some embodiments, the event may be classified as a candidate for an ONT if its reflectance peak level is stable. Whereas, if its reflectance peak level is unstable, the event may be discarded as a potential ONT and be classified as a potential physical layer fault or open connection.

However, the stability only may not be sufficient to determine whether the event is an ONT or not. Other factors, such as its reflectance peak level. Event classification may therefore also consider the reflectance peak level such that the event is classified as an ONT if its reflectance peak level is stable and within a range an expected range of reflectance peak levels.

Furthermore, to make the detection more robust, the optical distance relative to the OLT may further be used as a criterion for classification as an ONT such that the event is classified as an ONT if its reflectance peak level is stable and within a range an expected range of reflectance peak levels and its position is within a range expected positions.

In some implementations, once the event is classified as an ONT, its reflectance peak level may be monitored over time as a health indicator to detect any eventual anomaly in the optical fiber link reaching the corresponding Optical Network Terminal. For example, if the reflectance peak level vanishes below any expected fluctuation of ONT reflectance peak level or if the reflective peak level becomes unstable, a failure notification may be generated.

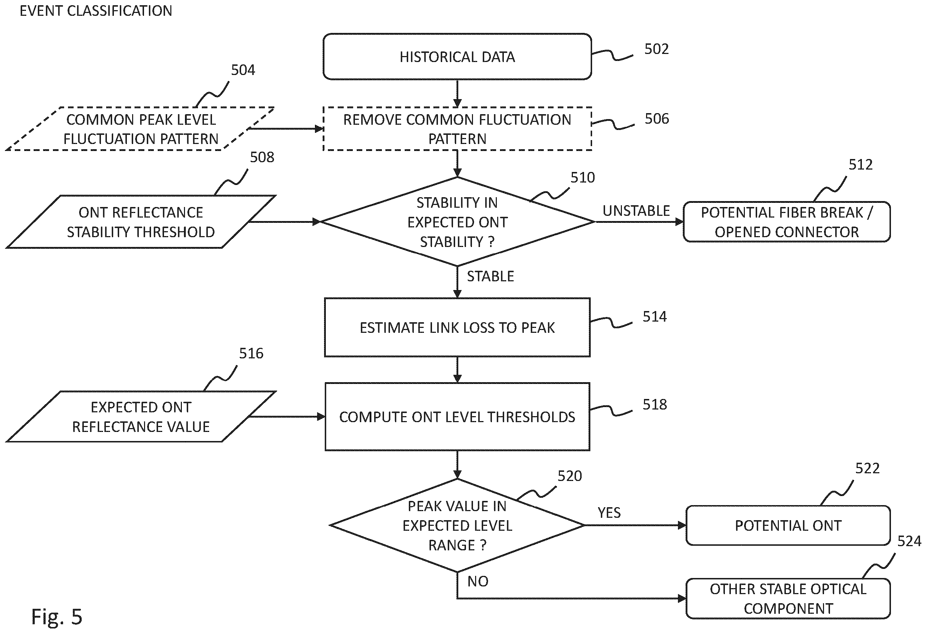

Fig. 5 illustrates an exemplary classification method in more detail, in accordance with one embodiment which is used to discriminate physical layer faults from expected optical network components, such as ONT reflectance peaks. The classification method of Fig. 5 represents one exemplary implementation of step 450 of Fig. 4.

In step 502, historical data obtained from a plurality of OTDR acquisitions performed toward the PON over a period of time is received. The historical data may comprise parameters charactering a target event to be classified, such as its reflectance peak level and fluctuations thereof over the period of time.

It is noted that some level of fluctuations is expected in the level of the ONT reflectance peaks as measured by OTDR monitoring. Such fluctuations may be due, e.g., to natural dependency of optical components to temperature, or other physical constraints affecting the overall link loss, etc. Such fluctuations are likely to be observed other ONT reflectance peaks in the PON under test. In order to distinguish between normal fluctuations and instabilities, a common peak level pattern may be characterized for a specific period of time and recorded.

In step 504, the common peak level pattern is received. This pattern may be obtained from historical OTDR acquisitions as acquired over the period of time. For example, multiple reflective events observed in the PON under test may be characterized from such data and fluctuations of their reflectance peak levels be averaged among the reflective events to obtain a common peak level fluctuation pattern.

In step 506, the common peak level fluctuation pattern obtained in 504 is removed from the reflectance peak level fluctuations of the specific event to be classified.

In step 508, a stability threshold is obtained for evaluating the event as an ONT candidate based on an expected stability of ONT reflectance peaks. As discussed herein above, for example, a fixed threshold of, e.g., 1 or 2 dB, may be used or a dynamic threshold may be derived from historical data.

In step 510, it is determined whether the stability of the reflectance peak level of the event falls within an expected ONT stability. For example, the reflectance peak level is considered stable if its fluctuations, over the period of time, are below a reflectance stability threshold 508 and the reflectance peak level is considered unstable if fluctuations are above the reflectance stability threshold 508.

In step 512, if the reflectance peak level is unstable, the event may be discarded as a potential ONT and be classified as a potential physical layer fault or open connection. In step 514, if the reflectance peak level is stable, the event remains a candidate for an ONT.

In steps 514, 516, 518, the value of the reflectance peak level is used to further discriminate between potential ONTs and other stable optical components within the ODN.

As opposed to other optical components such as a splitter or a connector, a level of the reflectance peak that is generated by an ONT should be within an expected range of absolute values. For example, according to manufacturer's specification and/or empirical characterization, an ONT may be expected to generate a reflectance of about -32 dB at 1650 nm, with respect to the ground backscattering level. However, as explained hereinabove, in PON monitoring, the backscattering level is often hidden by backscattering levels that are caused by other branches of the ODN. Therefore, instead of looking at the reflectance value, the method looks at the reflectance peak level in the OTDR trace. The expected value of the reflectance peak level needs to account for the link loss between the OLT and the target event.

In step 514, the link loss between the OLT and the target event may be estimated. For example, the link loss may be estimate from an expected value of loss as calculated considering expected optical fiber loss for a given distance between the OLT and the reflectance peak, to which expected splitter loss is added. Such information may be obtained from manufacturer's specifications and/or measurements made during network deployment. However, in other embodiments, such link loss may be discovered from prior OTDR measurement data or obtained from an active system performing equivalent measurements. Or a combination two or more of the specifications, prior measurements and discovery may be used. For example, the method may use link loss information from prior HRD test result, ONT power levels or typical loss budget.

In step 516, the expected range of values of ONT reflectance is obtained. For example, the method may use ONT manufacturer's specifications and/or measurements made during network deployment. For instance, expected range of values of ONT reflectance be between about -29 and -35 dB.

In step 518, the estimated link loss 516, combined with the expected range of values of ONT reflectance 516 provides the expected range of values of an ONT reflectance peak level. For instance, an ONT reflectance value may range between about -29 and -35 dB. After a link loss of 20 dB, the ONT reflectance peak level is expected to fall within a range of about -69 to -75 dB, when measured relative to the power injected in the fiber at the central office.

In step 520, it is determined whether the reflectance peak level of the target event falls within the expected range of values of an ONT reflectance peak level. If so, the target event is classified as a potential ONT. In not, it is classified as another stable optical event, such as a splitter or an optical connector.

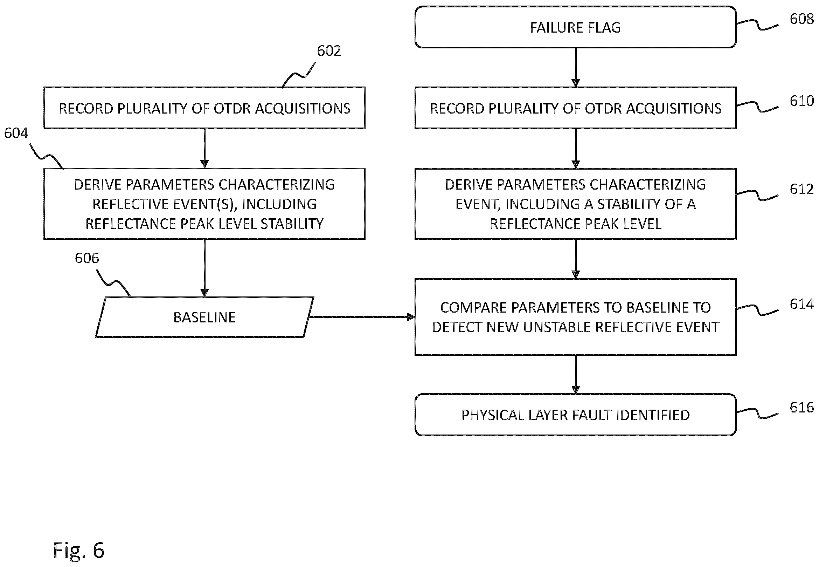

Fig. 6 illustrates an exemplary OTDR monitoring method for identifying a physical layer fault along an optical fiber link, in accordance with one embodiment.

Some use cases may include a monitoring strategy where in case of a failure on the link, OTDR monitoring is used help discriminate between physical layer fault or other possible issues (power, transport layer, IP layer...). As part of the monitoring strategy, an OTDR characterization baseline is saved during proper operation of the link. The baseline may include one or more reflectance peaks as well as loss events. The OTDR characterization used to establish the baseline may also include historical data, especially on reflectance peaks, so as to associate a stability parameter to each reflectance peak.

Whenever a failure arises on the link, a further investigation may be performed in order to determine if there is a physical layer (fiber) issue on the link. In order to do so, the OTDR monitoring rate may be increased so as to record a new measurement comprising short-term history of reflectance levels with more data points and observe variation patterns. The new measurement is then compared to the baseline so as to detect any new unstable reflective event (i.e., a newly discovered event having a unstable reflectivity peak level or an know reflective event that was previously stable but became unstable). For example, any new unstable reflective event that varies of more than a stability threshold, such as 2 dB, may be identified as a physical layer fault, such as a fiber break.

Accordingly, in step 602, the OTDR monitoring unit 10 records a plurality of OTDR acquisitions performed toward the optical fiber link over a period of time to obtain the baseline.

In step 604, for each reflective event identified in the recorded OTDR acquisitions, parameters characterizing the events are derived using the recorded OTDR acquisitions, wherein one of the derived parameters represents a stability, over the first period of time, of a reflectance peak level associated with each event. This step establishes the baseline characterizing the optical fiber link, which at least comprises a position and a reflectance peak level stability of each reflective event along the optical fiber link. Optionally, another one of the derived parameters may represent a value of the reflectance peak level associated with the event.

In step 608, a failure notification is received, which indicates a communication failure along the optical fiber link. In some implementations, the failure notification may be generated by the OTDR monitoring system itself, e.g., by monitoring ONT reflectance peak levels over time as a health indicator as discussed hereinabove, or from an external source notifying an unexpected subscriber service interruption.

In step 610, upon receiving the failure notification, a second plurality of OTDR acquisitions is recorded over a second period of time. In some embodiments, a repetition rate of the OTDR acquisitions may be increased upon receiving the failure notification to record the second plurality of OTDR acquisitions.

In step 612, for each reflective event identified in the second set of OTDR acquisitions, new parameters characterizing the events are derived using the recorded OTDR acquisitions, wherein one of the derived parameters represents a stability, over the second period of time, of a reflectance peak level associated with each event.

In step 614, the parameters derived from the set of OTDR acquisitions are then compared to the baseline so as to detect any new unstable reflective event (i.e., a newly discovered event having an unstable reflectance peak level or an know reflective event that was previously stable but became unstable).

In yet another embodiment, when a new peak appears, its reflectance peak level may be recorded over a time period (such as 30 minutes or ideally 4 hours). The amplitude of the reflectance peak level fluctuations may be compared to the most stable reflectance peaks in the optical fiber network to account for any end-to-end loss variation of the common optical path of the distribution network. If the fluctuations are significantly greater than the most stable reflectance peaks and over 0.5 dB, then this new peak can be considered as a new unstable reflective event.

In step 616, if a new unstable reflective event is found, a potential physical layer fault is identified.

It is important to note that in some instances, a fiber break could be very close to an ONT and have a similar reflectance value, but it will be less stable over time so it could be discriminated from the ONT reflectance using its stability.

Optionally, in some implementations, an OTDR equipped with a laser that allows small tuning of the wavelength may be leveraged. Tuning the OTDR, even slightly, may be used stimulate a reflectance peak level fluctuation of a reflectance peak associated with a fiber break by changing its interference pattern. In a diagnosis mode, the OTDR monitoring method may slightly tune the wavelength of the OTDR light source while recording a plurality of OTDR acquisitions to determine a stability a over wavelength of the reflectance peak level. Fiber breaks and open APC connectors are sensitive to wavelength, whereas ONT reflectance peaks are not.

### Example of OTDR device architecture

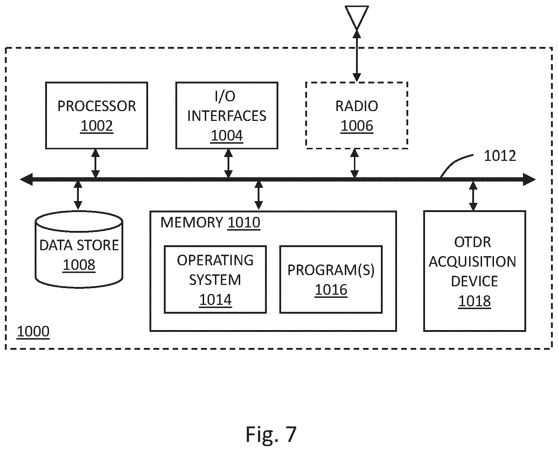

Fig. 7 is a block diagram of an OTDR device 1000 which may embody the OTDR device 12 of the system of Fig. 1. The OTDR device 1000 may comprise a digital device that, in terms of hardware architecture, generally includes a processor 1002, input/output (I/O) interfaces 1004, an optional radio 1006, a data store 1008, a memory 1010, as well as an optical test device including an OTDR acquisition device 1018. It should be appreciated by those of ordinary skill in the art that Fig. 7 depicts the OTDR device 1000 in a simplified manner, and a practical embodiment may include additional components and suitably configured processing logic to support known or conventional operating features that are not described in detail herein. A local interface 1012 interconnects the major components. The local interface 1012 can be, for example, but not limited to, one or more buses or other wired or wireless connections, as is known in the art. The local interface 1012 can have additional elements, which are omitted for simplicity, such as controllers, buffers (caches), drivers, repeaters, and receivers, among many others, to enable communications. Further, the local interface 1012 may include address, control, and/or data connections to enable appropriate communications among the aforementioned components.

The processor 1002 is a hardware device for executing software instructions. The processor 1002 may comprise one or more processors, including central processing units (CPU), auxiliary processor(s) or generally any device for executing software instructions. When the OTDR device 1000 is in operation, the processor 1002 is configured to execute software stored within the memory 1010, to communicate data to and from the memory 1010, and to generally control operations of the OTDR device 1000 pursuant to the software instructions. In an embodiment, the processor 1002 may include an optimized mobile processor such as optimized for power consumption and mobile applications. The I/O interfaces 1004 can be used to receive user input from and/or for providing system output. User input can be provided via, for example, a keypad, a touch screen, a scroll ball, a scroll bar, buttons, barcode scanner, and the like. System output can be provided via a display device such as a liquid crystal display (LCD), touch screen, and the like, via one or more LEDs or a set of LEDs, or via one or more buzzer or beepers, etc. The I/O interfaces 1004 can be used to display a graphical user interface (GUI) that enables a user to interact with the OTDR device 1000 and/or output at least one of the values derived by the OTDR analyzing module.

The radio 1006, if included, may enable wireless communication to an external access device or network. Any number of suitable wireless data communication protocols, techniques, or methodologies can be supported by the radio 1006, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; Long Term Evolution (LTE); cellular/wireless/cordless telecommunication protocols (e.g. 3G/4G, etc.); NarrowBand Internet of Things (NB-loT); Long Term Evolution Machine Type Communication (LTE-M); magnetic induction; satellite data communication protocols; and any other protocols for wireless communication. The data store 1008 may be used to store data, such as OTDR traces and OTDR measurement data files. The data store 1008 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1008 may incorporate electronic, magnetic, optical, and/or other types of storage media.

The memory 1010 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 1010 may incorporate electronic, magnetic, optical, and/or other types of storage media. Note that the memory 1010 may have a distributed architecture, where various components are situated remotely from one another, but can be accessed by the processor 1002. The software in memory 1010 can include one or more computer programs, each of which includes an ordered listing of executable instructions for implementing logical functions. In the example of Fig. 7, the software in the memory 1010 includes a suitable operating system (O/S) 1014 and computer programs 1016. The operating system 1014 essentially controls the execution of other computer programs and provides scheduling, input-output control, file and data management, memory management, and communication control and related services. The program(s) 1016 may include various applications, add-ons, etc. configured to provide end-user functionality with the OTDR device 1000. For example, example programs 1016 may include a web browser to connect with a server for transferring OTDR measurement data files, a dedicated OTDR application configured to control OTDR acquisitions by the OTDR acquisition device 1018, set OTDR acquisition parameters, analyze OTDR traces obtained by the OTDR acquisition device 1018 and display a GUI related to the OTDR device 1000. For example, the dedicated OTDR application may embody an OTDR analysis module configured to analyze acquired OTDR traces in order to characterize the optical fiber link under test, and produce OTDR measurement data files.

It is noted that, in some embodiments, the I/O interfaces 1004 may be provided via a physically distinct mobile device (not shown), such as a handheld computer, a smartphone, a tablet computer, a laptop computer, a wearable computer or the like, e.g., communicatively coupled to the OTDR device 1000 via the radio 106. In such cases, at least some of the programs 1016 may be located in a memory of such a mobile device, for execution by a processor of the physically distinct device. The mobile device may then also include a radio and be used to transfer OTDR measurement data files toward a remote test application residing, e.g., on a server.

It should be noted that the OTDR device shown in Fig. 7 is meant as an illustrative example only. Numerous types of computer systems are available and can be used to implement the OTDR device.

### Example of OTDR acquisition device architecture

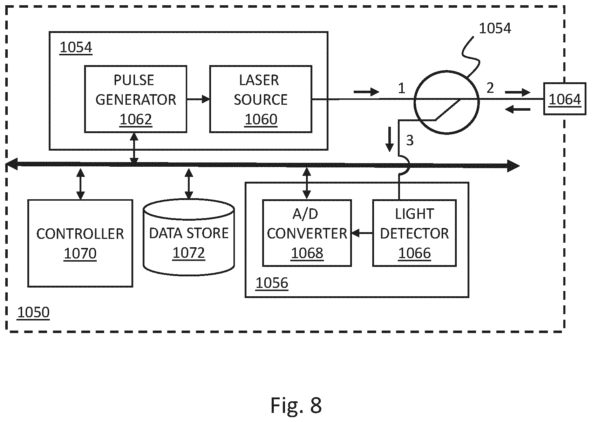

Fig. 8 is a block diagram an embodiment of an OTDR acquisition device 1050 which may embody the OTDR acquisition device 1018 of the OTDR device 1000 of Fig. 7.

The OTDR acquisition device 1050 is connectable toward the tested optical fiber link via an output interface 1064, for performing OTDR acquisitions toward the optical fiber link. The OTDR acquisition device 1050 comprises conventional optical hardware and electronics as known in the art for performing OTDR acquisitions over an optical fiber link.

The OTDR acquisition device 1050 comprises a light generating assembly 1054, a detection assembly 1056, a directional coupler 1058, as well as a controller 1070 and a data store 1072.

The light generating assembly 1054 is embodied by a laser source 1060 driven by a pulse generator 1062 to generate the OTDR test signal comprising test light pulses having desired characteristics. As known in the art, the light generating assembly 1054 is adapted to generate test light pulses of varied pulse widths, repetition periods and optical power through a proper control of the pattern produced by the pulse generator 1062. One skilled in the art will understand that it may be beneficial or required by the application to perform OTDR measurements at various different wavelengths. For this purpose, in some embodiments, the light generating assembly 1054 is adapted to generate test light pulses having varied wavelengths by employing a laser source 1060 that is tunable for example. It will be understood that the light generating assembly 1054 may combine both pulse width and wavelength control capabilities. Of course, different and/or additional components may be provided in the light generating assembly, such as modulators, lenses, mirrors, optical filters, wavelength selectors and the like.

The light generating assembly 1054 is coupled to the output interface 1064 of the OTDR acquisition device 1050 through a directional coupler 1058, such as a circulator, having three or more ports. The first port is connected to the light generating assembly 1054 to receive the test light pulses therefrom. The second port is connected toward the output interface 1064. The third port is connected to the detection assembly 1056. The connections are such that test light pulses generated by the light generating assembly 1054 are coupled to the output interface 1064 and that the return light signal arising from backscattering and reflections along the optical fiber link 110 is coupled to the detection assembly 1056.

The detection assembly 1056 comprises a light detector 1066, such as a photodiode, an avalanche photodiode or any other suitable photodetector, which detects the return light signal corresponding to each test light pulse, and an analog to digital converter 1068 to convert the electrical signal proportional to the detected return light signal from analog to digital in order to allow data storage and processing. It will be understood that the detected return light signal may of course be amplified, filtered or otherwise processed before analog to digital conversion. The power level of return light signal as a function of time, which is obtained from the detection and conversion above, is referred to as one acquisition of an OTDR trace. One skilled in the art will readily understand that in the context of OTDR methods and systems, each light acquisition generally involves propagating a large number of substantially identical light pulses in the optical fiber link and averaging the results, in order to improve the Signal-to-Noise Ratio (SNR). In this case, the result obtained from averaging is herein referred to as an OTDR trace.

Of course, the OTDR acquisition device 1050 may also be used to perform multiple acquisitions with varied pulse widths to obtain a multi-pulsewidth OTDR measurement.

The OTDR acquisition device 1050, and more specifically the light generating assembly 1054 is controlled by the controller 1070. The controller 1070 is a hardware logic device. It may comprise one or more Field Programmable Gate Array (FPGA); one or more Application Specific Integrated Circuits (ASICs) or one or more processors, configured with a logic state machine or stored program instructions. When the OTDR acquisition device 1050 is in operation, the controller 1070 is configured to control the OTDR measurement process. The controller 1070 controls parameters of the light generating assembly 1054 according to OTDR acquisition parameters that are either provided by the operator of the OTDR software or otherwise determined by program(s) 1016.

The data store 1072 may be used to cumulate raw data received from the detection assembly 1056, as well as intermediary averaged results and resulting OTDR traces. The data store 1008 may include any of volatile memory elements (e.g., random access memory (RAM, such as DRAM, SRAM, SDRAM, and the like)) or the like and it may be embedded with the controller 1070 or distinct.

The OTDR traces acquired by the OTDR acquisition device 1050 may be received and analyzed by one or more of the computer programs 1016 and/or stored in data store 1008 for further processing.

It should be noted that the architecture of the OTDR acquisition device 1050 as shown in Fig. 8 is meant as an illustrative example only. Numerous types of optical and electronic components are available and can be used to implement the OTDR acquisition device.

It will be appreciated that some embodiments described herein may include one or more generic or specialized processors ("one or more processors") such as microprocessors; Central Processing Units (CPUs); Digital Signal Processors (DSPs): customized processors such as Network Processors (NPs) or Network Processing Units (NPUs), Graphics Processing Units (GPUs), or the like; Field Programmable Gate Arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more Application Specific Integrated Circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory), Flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

The embodiments described above are intended to be exemplary only and one skilled in the art will recognize that numerous modifications can be made to these embodiments without departing from the scope of the invention.

The scope of the invention is therefore intended to be limited solely by the appended claims.

Although the present disclosure has been illustrated and described herein with reference to specific embodiments and examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following claims.

## Claims

1. An OTDR method for characterizing an event along an optical fiber link, the method comprising:
recording a plurality of OTDR acquisitions performed toward the optical fiber link over a period of time, wherein each OTDR acquisition is performed by propagating in the optical fiber link, a pulsed test signal and detecting corresponding return light from the optical fiber link representing backscattered and reflected light as a function of distance in the optical fiber link;
deriving parameters characterizing the event using the recorded OTDR acquisitions, wherein one of said parameters represents a stability, over the period of time, of a reflectance peak level associated with the event; and
classifying the event at least based on said stability.

2. The OTDR method as claimed in claim 1, wherein the event is classified as a candidate for an Optical Network Terminal if its reflectance peak level is stable.

3. The OTDR method as claimed in claim 1, wherein the event is classified as an Optical Network Terminal if its reflectance peak level is stable and within an expected range of reflectance peak levels.

4. The OTDR method as claimed in any one of claims 1 to 3, wherein the event is classified as a potential physical layer fault if its reflectance peak level is unstable.

5. The OTDR method as claimed in claim 2 or 3, wherein a reflectance peak level is defined as stable if fluctuations of the reflectance peak level are below a reflectance stability threshold.

6. The OTDR method as claimed in claim 4, wherein a reflectance peak level is defined as unstable if fluctuations of the reflectance peak level, over the period of time, are above a reflectance stability threshold.

7. The OTDR method as claimed in claim 3, further comprising: once the event is classified as an Optical Network Terminal, monitoring its reflectance peak level over time as a health indicator to detect any eventual anomaly in the optical fiber link reaching the corresponding Optical Network Terminal.

8. An OTDR method for identifying a physical layer fault along an optical fiber link, the method comprising:
recording a plurality of OTDR acquisitions performed toward the optical fiber link over a first period of time, wherein each OTDR acquisition is performed by propagating in the optical fiber link, a pulsed test signal and detecting corresponding return light from the optical fiber link representing backscattered and reflected light as a function of distance in the optical fiber link;
deriving parameters characterizing one or more reflective events along the link using the recorded OTDR acquisitions, in order to establish a baseline characterizing the optical fiber link, the baseline comprising a position and a reflectance peak level stability of each said reflective events along the optical fiber link;
receiving a failure notification indicating a communication failure along the optical fiber link,
upon receiving the failure notification, recording a second plurality of OTDR acquisitions over a second period of time;
deriving parameters characterizing one or more reflective events along the link using the second plurality of OTDR acquisitions, wherein said parameters comprise a position and a reflectance peak level stability, over the second period of time, of each said reflective events along the link; and
compare the parameters derived from the second plurality of OTDR acquisitions to the baseline to detect any new unstable reflective event, wherein a new unstable reflective event is identified as a physical layer fault.

9. The OTDR method as claimed in claim 8, wherein a reflectance peak level is defined as unstable if fluctuations of the reflectance peak level, over the period of time, are above a reflectance stability threshold.

10. The OTDR method as claimed in claim 8 or 9, wherein a repetition rate of the OTDR acquisitions is increased upon receiving said failure notification to record said second plurality of OTDR acquisitions.

11. An OTDR system for characterizing an optical fiber link, the OTDR system comprising:
an OTDR acquisition device connectable toward an end of the optical fiber link for performing a plurality of OTDR acquisitions toward the optical fiber link, wherein each OTDR acquisition is performed by propagating in the optical fiber link, a pulsed test signal and detecting corresponding return light from the optical fiber link representing backscattered and reflected light as a function of distance in the optical fiber link; and
a processing unit receiving the OTDR trace and configured to:
record a plurality of OTDR acquisitions over a period of time;
derive parameters characterizing the event using the recorded OTDR acquisitions, wherein one of said parameters represents a stability, over the period of time, of a reflectance peak level associated with the event; and
classify the event at least based on said stability.

12. The OTDR system as claimed in claim 11, wherein the event is classified as a candidate for an Optical Network Terminal if its reflectance peak level is stable.

13. The OTDR system as claimed in claim 11, wherein the event is classified as an Optical Network Terminal if its reflectance peak level is stable and within an expected range of reflectance peak levels.

14. The OTDR system as claimed in any one of claims 11 to 13, wherein the event is classified as a potential physical layer if its reflectance peak level is unstable.

15. The OTDR system as claimed in any one of claims 11 to 14, wherein said OTDR acquisition device is at least slightly tunable, wherein a wavelength of the pulsed test signal is slightly tuned while recording said plurality of OTDR acquisitions and wherein said stability represents a stability over wavelength of a reflectance peak level associated with the event.
